# EUROPEAN PATENT APPLICATION

(11) **EP 3 434 462 A1**
(43) Date of publication of application: **30.01.2019**
(21) Application number: 18180117.6
(22) Date of filing: 27.06.2018
(51) Int. Cl.: B29D 12/02, B29C 35/02, B32B 23/00, G02C 5/00, G02C 5/14, G02C 5/16, C08L 1/12

(54) **SPECTACLES RUBBER PLATE AND MANUFACTURE METHOD THEREOF**

(30) Priority: 26.07.2017 CN 201710618770
(71) Applicant: Shen Zhen Jimei New Material Co., Ltd., Shenzhen, Guangdong (CN)
(72) Inventor: LI, Chongping, Shenzhen, Guangdong (CN)
(74) Representative: Sun, Yiming

(57) **Abstract**

A spectacles rubber plate is extruded from a raw material including a raw rubber and a colorant; wherein the raw material includes 98.8 to 99.5 parts by mass of the raw rubber and 0.1 to 0.3 parts by mass of the colorant. The spectacles rubber plate of the present invention may be directly used for laser printing, and compared with the products obtained by the existing methods of processing patterns such as the screen printing and transferring printing process, the product of the present invention could obtain revolutionary improvement in the aspects of the weather resistance, the migration resistance of color and the exquisiteness of the texture pattern.

## Description

### TECHNICAL FIELD

The present application relates to the technical field of spectacles material, and in particular, to spectacles rubber plate and manufacture method for the same.

### BACKGROUND

Spectacles manufactured by rubber plate are more and more popular in recent years, especially among spectacles designers and trend crowds. An important reason is that the plate material is colorful and with rich fancy patterns. In addition, the easy processability of the vinegar fiber sheet can make the designer's imagination and inspiration unlimited, so as to create flexible shapes. The processing methods of the fancy patterns of the existing spectacles manufactured by rubber plate are divided into the following two stages: 1) In the production stage of the plate, the pattern layer produced by the screen printing and transferring technology is mainly combined with the substrate by splicing and pressing; 2) In the production stage of spectacles, The processes, such as mosaic, screen printing and injection, transferring printing, splicing, laser and hot stamping process and so on, are mainly used to produce the pattern, text and logo required by the products.

In the prior art, at the stage of pattern processing, since the laser printing process could not be well used on the plate, it can only adopt a variety of processes like screen printing and other processes. However, the screen printing and transferring technology tends to produce color difference, and explosion and stratification will occur when the finished product is processed during the subsequent processing stage. In addition, the material must be pre-treated and the surface of pattern should be processed. Due to the different shapes of the spectacles, the processing method is limited. Because such processes are generally in the later stage of the production, losses are high once mistake happens.

### SUMMARY

In view of this, an aspect of the embodiments of the present application is: to provide a spectacles rubber plate, which could be directly used for laser printing, so that the processing of pattern is relatively simple.

A spectacles rubber plate is extruded from a raw material comprising a raw rubber and a colorant; wherein the raw material comprises 98.8 to 99.5 parts by mass of the raw rubber and 0.1 to 0.3 parts by mass of the colorant.

Further, the raw material further comprises a laser marking agent.

Further, the laser marking agent is in an amount of 0.1 to 1 part by mass.

Further, the raw material further comprises a plasticizer in range from 0.08 to 0.12 parts by mass.

Further, the raw material further comprises an anti-UV agent in range from 0.1 to 1 part by mass.

Further, the raw rubber is cellulose acetate.

Further, the laser marking agent comprises mica powder in range from 46wt% to 62wt% and tin dioxide or antimony dioxide in range from 38wt% to 54wt%, based on that the total mass of the laser marking agent is 100wt%.

Another aspect of the embodiments of the present application is: to provide a manufacture method for a spectacles rubber plate. The spectacles rubber sheet obtained by the manufacture method could be directly processed by laser printing, so that the processing of pattern is relatively simple.

A manufacture method for a spectacles rubber sheet as described above comprises the following steps:
mixing the components of the raw material to obtain a mixture;
and, extruding and molding the mixture.

Further, the extruding and molding is performed at a temperature of 160°C to 220°C.

Further, the manufacture method further comprises preheating the components of the raw material after the step of mixing and before the step of the extruding and molding, the preheating is performed at a temperature of 80°C to 95°C, and the time of the preheating is in range from 2h to 4h.

The spectacles rubber plate of the embodiments of the present application may be directly used for laser printing, and compared with the products obtained by the existing methods of processing patterns such as the screen printing and transferring printing process, the product of the embodiments of the present application could obtain revolutionary improvement in the aspects of the weather resistance, the migration resistance of color and the exquisiteness of the texture pattern.

### DETAILED DESCRIPTION

Unless otherwise defined, all technical and scientific terms used herein have the same meaning as commonly understood by persons of ordinary skill in the art to which the present application belongs. In the event of conflict, the definitions in this description shall prevail.

Terms used herein:
"Prepared by" is synonymous with "comprising." The terms "comprising," "including," "having," "containing," or any other variation thereof used herein are intended to cover a non-exclusive inclusion. For example, a composition, step, method, article, or device that comprises the listed elements is not necessarily limited to only those elements, but may comprise other elements that are not explicitly listed or elements that are inherent to such a composition, step, method, article, or device.

The conjunction "consisting of' excludes any unspecified elements, steps, or components. If used in the claims, this phrase will make the claim closed so that it does not comprise material other than those described, except conventional impurities related to the material. When the phrase "consisting of' appears in a clause of a claim body rather than immediately after the subject, it only limits to the elements described in that clause; other elements are not excluded from the claim being described as a whole.

When an equivalent, concentration, or other value or parameter is expressed in the range, preferred range, or range defined by a series of upper limit preferred values and lower limit preferred values, this should be understood to specifically disclose any range defined by any pair from an upper limit or preferred value in any range to a lower limit or preferred value in any range, regardless of whether the range is individually disclosed. For example, when the range of "1 to 5" is disclosed, the described range should be interpreted as comprising the ranges of "1 to 4," "1 to 3," "1 to 2," and "1 to 2 and 4 to 5", "1 to 3 and 5" and so on. When a range of values is described herein, unless otherwise stated, the range is intended to comprise its endpoints and all integers and fractions within that range.

The "parts by mass" refers to a basic unit of measurement representing the mass ratio relationship of a plurality of components, and 1 part may represent an arbitrary unit mass, for example, may represent 1 g or 2.689 g. If we say that the mass of the A component is a, and the mass of the B component is b, the ratio of the mass of the A component to the mass of the B component is a: b. Or, it means that the mass of the A component is aK, and the mass of the B component is bK (K is an arbitrary number, indicating a multiple factor). It should not be misunderstood that unlike the mass fraction, the sum of the parts by mass of all components is not limited to 100 parts.

"And/or" is used to mean that one or both of the illustrated conditions may occur, for example, A and/or B comprises (A and B) and (A or B);
In addition, the indefinite articles "a" and "an" before an element or component of the present application do not limit the number of elements or components (ie, the number of occurrences). Thus, "a" or "an" should be understood to comprise one or at least one, and the singular form of an element or component also comprises a plural form unless the quantity clearly dictates a singular form.

The spectacles rubber plate of the present application is extruded from a raw material comprising a raw rubber and a colorant; wherein, the raw material comprises the raw rubber in range from 98.8 to 99.5 parts by mass and the colorant in range from 0.1 to 0.3 parts by mass. Specifically, the amount of the raw rubber may be 98.8 parts by mass, 98.9 parts by mass, 99.0 parts by mass, 99.1 parts by mass, 99.2 parts by mass, 99.4 parts by mass or 99.5 parts by mass and so on; the amount of the colorant may be 0.1 parts by mass, 0.11 parts by mass, 0.12 parts by mass, 0.15 parts by mass, 0.2 parts by mass, 0.25 parts by mass, 0.28 parts by mass, 0.29 parts by mass or 0.30 parts by mass and so on.

The above-mentioned raw rubber refers to polymer resin acted as a main body, preferably refers to cellulose acetate. Here, cellulose acetate is also known as cellulose acetate, cellulose diacetate, cellulose acetate, cellulose acetate, cellulose acetate, cellulose monoacetate, cellulose diacetate, acetyl cellulose or cellulose acetate, etc. The CAS number is 9004-35-7. It refers to a thermoplastic resin obtained by esterification of acetic acid as a solvent and acetic anhydride as an acetylating agent under the action of a catalyst.

In addition, the raw rubber may also be other resins that could be well printed by laser, and one of them is, for example, a PA/ABS alloy as described in Chinese Patent application of CN103059557A, and the ratio of components is 30 to 80 parts of PA and 10 to 50 parts of ABS, wherein PA could be nylon 6, the relative viscosity of PA ranges from 2.4 to 3.8, and rubber content of ABS ranges from 35 to 70%.

A second implementation form of the raw rubber may be polycarbonate. The weight-average molecular weight of polycarbonate ranges from 10,000 to 200,000.

A third implementation form of the raw rubber may be a glass fiber reinforced polybutylene terephthalate resin. The glass fiber reinforced polybutylene terephthalate resin comprises 10 to 99 parts of polybutylene terephthalate, 0 to 40 parts of polyethylene terephthalate, and 10 to 40 parts of continuous glass fiber. Wherein, an intrinsic viscosity of the polybutylene terephthalate ranges from 0.8 to 1.0 ml/g, and the continuous glass fiber is an alkali-free glass fiber having a diameter of 10 to 25 µm. Similar to this embodiment, it may be a copolyester derived by glycol, 1,4-cyclohexanedimethanol, and terephthalic acid dimethyl acetic acid or terephthalic acid.

In addition, the raw rubber may also be PP, PE and so on.

In order to improve the sharpness and color resistance transference of the patterns later marked by laser, the raw material may also comprise a laser marking agent.

It's suitable that the amount of the laser marking agent is 0.1 to 1 parts by mass, for example, 0.1 parts by mass, 0.11 parts by mass, 0.12 parts by mass, 0.15 parts by mass, 0.2 parts by mass, 0.4 parts by mass, 0.55 parts by mass, 0.7 parts by mass, and 0.8 parts by mass, 0.9 parts by mass, 0.95 parts by mass or 1 part by mass.

Herein, the laser marking agent preferably comprises mica powder in rang from 46wt% to 62wt% and tin dioxide or antimony dioxide in range from 38wt% to 54wt%, based on that the total mass of the laser marking agent is 100wt%. The particle size of the laser marking agent is preferably less than 15 microns.

In addition, the laser marking agent could also be 1,3,5,7-tetravinyl-1,3,5,7-tetramethylcyclotetrasiloxane or diphenylcarboxylsiloxane, compound comprising a silicon-oxygen bond and a benzene ring represented by diphenylcarboxylsiloxane, OnColorFastMar laser marking agents, Micabs A206 laser marking agents.

The above colorant refers to an additive for imparting color. The colorant is also mentioned as pigment in some situations. The colorant may be a natural colorant such as iron oxide, zinc oxide, zinc oxide, composite metal oxides, carbon black; it may also be an organic colorant such as anthraquinone, anthrone, azo and monoazo compound, aromatic mercapto amine, hydroxybenzimidazole, BONA lake pigment, diketopyrrolopyrrole-pyrroledione, oxazine, disazo compound, di-arylide, flavanthrone, reduced blue, isoindoline, composites metal, monoazo salt, tea phenol, b-phenols, naphthols AS, naphthol lake pigment, perylene, pyrolidone, phthalocyanine dye, pyranthrone, quinacridone, quinophthalone, and combinations thereof.

Optionally, the raw material of the spectacles rubber plate disclosed in the present application may further comprise a plasticizer in range from 0.08 to 0.12 parts by mass, for example, 0.08 parts by mass, 0.085 parts by mass, 0.09 parts by mass, 0.10 parts by mass, 0.11 parts by mass, and 0.115 parts by mass or 0.12 parts by mass.

Plasticizer is a chemical substance which could increase the elasticity of the polymer and reduce the glass transition temperature. Suitably and unrestrictedly, the plasticizer comprises: mineral oil, adipic acid, alkyl sulfates, azelate, benzoate, chlorinated paraffin, citrate, epoxide, ethylene glycol and ethyl ester, glutaric acid, hydrocarbon oil, isobutyrate, oleate, pentaerythritol derivatives, phosphate, phthalate, ester, polybutene, ricinoleate, sebacate, sulfanilamide agent, dioctyl phthalate and tetraoctyl pyromellitate, biphenyl derivatives, stearic acid, furan diester, fluorine-containing plasticizer, p-hydroxybenzoate, cyanate adduct, multi-ring aromatic compound, natural product derivatives, nitrile, siloxane-based plasticizer, tar-based product, thioether, and combinations thereof.

Optionally, it is also possible to add an additive so as to change volume, weight, cost and/or technical properties. The additive may comprise talc powder, calcium carbonate, chalk, calcium sulphate, clay, china clay, silica, glass , pyrogenic silica, mica, ca silica, feldspar, aluminum silicate, calcium silicate, alumina; water and alumina such as aluminum hydroxide, glass microsphere, ceramic microsphere, heat-shrinkable microsphere, barite , wood flour, glass fiber, carbon fiber, marble dust, cement dust, magnesium oxide, magnesium hydroxide, antimony oxide, zinc oxide, barium sulfate, titanium dioxide, and combinations thereof. In some embodiments, the additive is talc powder, calcium carbonate, silica, glass fiber, alumina, titanium dioxide, or mixtures thereof. In other embodiments, the additive is talc powder, calcium carbonate, barium sulfate, glass fiber, or mixtures thereof. For reference, the amount of these types of additive could be 0.1 to 0.5 parts by mass.

Optionally, the raw material of the spectacles rubber plate disclosed herein may also comprise an anti-UV agent. The anti-UV agent is also mentioned as UV stabilizer in certain situations, to prevent or reduce the level of polymer composition by ultraviolet radiation. Suitably and unrestrictedly, the UV stabilizer comprises: benzophenone, benzotriazole, aryl ester, oxanilide, carbon black, hindered amine, phenolic antioxidant, metal salt, zinc compound, and combinations thereof. In the use, the mass of the UV stabilizer may be 0.1 to 1 parts by mass.

The raw material of the spectacles rubber plate disclosed herein may optionally comprise an antioxidant which could prevent oxidation of the polymer and the organic additives in the polymer. Antioxidants known to the person skilled in the art may be added to the antioxidant disclosed herein. Suitably and unrestrictedly, the antioxidant comprises aromatic amine or hindered amine, such as: alkylated diphenylamine, phenyl-a-theamin, phenyl-a-theamin substituted by aralkyl, aralkyl-p-phenylenediamine, tetramethyl-diaminodiphenylamine; phenol, such as: 2,6-di-tert-butyl p-cresol, 1,3,5-trimethyl-2,4,6-tris (3,5- di-t-butyl-4- hydroxybenzyl) benzene, pentaerythrite tetra [β-(3,5-di-t-butyl-4-hydroxyphenyl)-propionate (eg: RGANP XTM 1010 from Ciba-Geigy, New York); acryloyl modified phenol: octadecyl (3,5-di-t-butyl-4-hydroxyphenyl)propionate (eg: RGANPXTM 1076 commercially available from Ciba Geigy); hydroxylamine based on single-oxygen phosphite and hydroxylamine based on two-oxygen phosphite, benzofuran derivatives, and combinations thereof. In the use, the proportion of the antioxidant of the polymer composition in the total weight of raw material of the spectacles rubber plate ranges from 0 to 5%, 0.0001 to 2.5%, and 0.001 to 1%.

Optionally, the raw material of the spectacles rubber plate disclosed herein may optionally comprise a lubricant. Generally, lubricant is used in particular to modify the rheology of the polymer composition melt, in order to improve the surface smoothness of the shaped article and/or to accelerate the diffusion of additives or a bulk of pigment. Lubricant known to the person skilled in the art may be added to the polymer composition disclosed herein. Suitably and unrestrictedly, the lubricant comprise fatty alcohol and hydroxy acid ester thereof, short chain alcohol fatty acid alcohol, fatty acid alcohol, fatty acid amine, metallic soap, oligomeric fatty acid alcohol, long chain alcohol fatty acid alcohol, montan wax, fluoropolymer, and combination thereof. In the use, the proportion of the lubricant in the total weight of the raw material ranges from 0 to 5%, 0.1 to 4%, or 0.1 to 3%.

Optionally, the raw material of the spectacles rubber plate disclosed herein may optionally comprise a slip agent. Generally, the slip agent could assist sliding by changing the characteristics of the film surface; and reduce the friction between the film layers and the friction between the film and other surfaces that are in contact with the film. Suitably and unrestrictedly, the slip agent comprises: primary amino group having 12 to 40 carbon atoms (eg, erucic amide, oleamide, stearamide, and docosanamide); second amino group having 18 to 80 carbon atoms (eg, stearylamine erucic amide, docosyl erucic amide, methyl erucic amide, and ethyl erucic amide); the second dual phthalein amino group having 18 to 80 carbon atoms (eg, ethylene-bis-stearamide, and ethylene-bis-oleamide); and combinations thereof. In some embodiments, the slip agent is a saturated aliphatic primary amino group having 18 to 40 carbon atoms (eg, stearic amide, docosanamide). In other embodiments, the slip agent is an unsaturated aliphatic primary amino group comprising at least one carbon-carbon double bond and having 18 and 40 carbon atoms (e.g., erucic amide and oleamide). In other embodiments, the slip aid is erucic amide, oleamide, stearamide, docosanamide, ethylene bis stearamide, ethylene bis oleamide, stearylamine erucic amide, docosyl erucic amide, and combinations thereof. In a particular embodiment, the slip agent is erucic amide. In the use, the proportion of the slip agent of the polymer in the total weight of the polymer ranges from 0 to 3%, 0.0001 to 2%, or 0.001 to 1%, 0.001 to 0.5%, or 0.05 to 0.25%.

Optionally, the raw material of the spectacles rubber plate disclosed herein may optionally comprise an antistatic agent. Generally, the antistatic agent may increase the conductivity of the polymer composition and prevent the accumulation release of electrostatic charge. Suitably and unrestrictedly, the antistatic agent comprises: conductive admixture (eg, carbon black, metal particles, and other electrically conductive particles), fatty acid ester (eg, glycerin monostearate), ethoxylated alkylamine, ethyl alcohol, ethoxylated alcohol, alkylsulfonate, alkylphosphate, quaternary ammonium salt, alkylbetaine and combinations thereof. In the use, the proportion of the antistatic agent in the total weight of the raw material ranges from 0 to 5%, 0.1 to 4%, or 0.1 to 2%.

Optionally, the raw material of the spectacles rubber plate disclosed herein may optionally comprise an anti-blocking agent. Generally, the anti-blocking agent may be used to prevent the undesirable adhesion between the layers of the object made from the polymer composition, especially under moderate pressure and heat during storage, manufacture or use. Suitably and unrestrictedly, the anti-blocking agent comprises: mineral (e.g., clay, chalk, and calcium carbonate), synthetic silica gel (e.g., SYLOBLOC from Grace Davison, Columbia, Maryland), natural silica (e.g., SUPER FLOSS from Celite Corporation, Santa Barbara, California), talc (e.g., OPTDBLOC from Luzenac, Centennial, CO), zeolite (e.g., SIPERNAT from Degussa, Parsippany, New Jersey), aluminosilicate (e.g., SILTON® from Mizusawa Industrial Chemicals, Tokyo, Japan), limestone (e.g., CARBOREX from Omya, Atlanta, Georgia), spherical polymeric particles (e.g., EPOSTAR, poly(methyl methacrylate) particles from Nippon Shokubai, Tokyo, Japan and TOSPEARL, silicone particles from GE Silicones, Wilton, CT), wax, amide group (e.g. stearylamine erucic amide, docosyl erucic amide, methyl erucic amide, ethyl erucic amide, ethylene-bis-stearamide, ethylene-bis-oleamide, and other slip agents), molecular sieve, and combinations thereof. The mineral particles could lower blocking by creating a physical gap between articles, while the organic anti-blocking agent could migrate to the surface to limit surface adhesion. In the use, the proportion of the anti-blocking agent in the total weight of the raw material ranges from 0 to 5%, 0.1to 4% or 0.1to 2%.

Optionally, the raw material of the spectacles rubber plate disclosed herein may optionally comprise a coupling agent. Generally, the role of the coupling agent is used to modify the surface of the thermally conductive powder and the filler, so as to enhance its compatibility with the organosilicon polymer, thereby facilitating the dispersion of the thermally conductive powder and the filler in the organosilicon polymer and avoiding the agglomeration of these powders. Suitably and unrestrictedly, the coupling agents comprises: siloxane coupling agent, titanate coupling agent, aluminate coupling agent, titanium aluminate coupling agent, boronate coupling agent, and so on. Herein, the siloxane coupling agent refers to a substance having a structure of 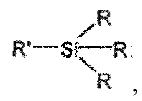 where R is a hydrolyzable group, specifically is halogen, alkoxy or acetamide, and R' is a hydrocarbon group comprising a double bond, specifically is vinyl, methacryloxy or methacryloxypropyl. For example, the siloxane coupling agent is γ- glycidyloxy propyl trimethoxysilane (KH560), γ- methacryloxy propyl trimethoxysilane (KH570), and γ- amino propyl triethoxysilane (KH550) and so on. An aluminate coupling agent refers to a substance having a structure of (C₃H₇O)ₓ • Al(OCOR)ₘ • (OCOR₁)ₙ • (OAB)_{y}, wherein, R and R1 may be a hydrocarbon group. Examples of aluminate coupling agent comprises specific examples of SG-A1821 (distearoyloxy isopropyl aluminate), DL-411, DL-411AF, DL-411D, DL-411DF, and aluminate ASA. The titanate coupling agent means ROO(4-n)Ti(OX-R'Y)n (wherein, n=2, 3); wherein, RO- is a hydrolyzable short-chain alkoxy group and could react with the hydroxyl groups on the surface of inorganic, so as to achieve the purpose of chemical coupling; OX-may be carboxyl, alkoxy, sulfonic acid group, phosphorus, and so on. The titanate coupling agent may be KR-TTS, whose chemical name is isopropyl triisostearoyltitanate; or titanate coupling agent TMC-10, whose chemical name is isopropyl tri (dioctylpyrophosphato) titanate; or titanate coupling agent TMC-101, whose chemical name is isopropyl dioleate acyloxy (dioctyl phosphonooxy) titanate; and so on.

Optionally, the raw material of the spectacles rubber plate disclosed herein may optionally comprise a flame retardant. Suitably and unrestrictedly, the flame retardant comprises organic flame retardant such as phosphorus-based flame retardant, such as TTBNP: (tris(2,2-dibromomethyl-3-bromopropyl phosphate)), TPP: triphenyl phosphate, RDP (resorcinol bisphosphate), BPAPP (bisphenol A bis (diphenyl) phosphate), BBC (bisphenol A bis (dimethyl) phosphonate); the organic flame retardant is preferably a phosphazene flame retardant, wherein the phosphazene flame retardant is a type of inorganic compound which has a main chain structure arranged by double bonds of alternate P and N, such as hexaphenoxy cyclotriphosphazene. Owning to the excellent synergy between phosphorus and nitrogen, the phosphazene flame retardant has an advantage of high thermal decomposition temperature and flame retardant effect, emitting less smoke and toxic gases, so it is more environmentally friendly. The flame retardant may be inorganic flame retardant such as aluminum hydroxide (ATH) and/or magnesium hydroxide (MH). The flame-retarding mechanism of aluminum hydroxide and magnesium hydroxide is absorbing heat through the dehydration reaction. Compared with halogen flame retardant and antimony trioxide, both of the aluminum hydroxide and the magnesium hydroxide are more environmentally friendly. Preferably, the flame retardant may be a combination of aluminum hydroxide and magnesium hydroxide. The combination of aluminum hydroxide and magnesium hydroxide has better flame-retardant synergy, and could make up the defect that the flame retardancy of the material will be reduced due to the lower decomposition temperature of ATH. As for the ratio of the aluminum hydroxide and the magnesium hydroxide, it could be conventionally adjusted according to actual need. Of course, other flame retardants such as red phosphorus or ammonium polyphosphate (APP) may also be added to the combination of aluminum hydroxide and magnesium hydroxide, which could greatly increase the LOI value of the material to which the composite flame retardant system is added, and reduce its smoke density during combustion. Microcapsulated red phosphorus and magnesium hydroxide (MH) synergistically realize flame retardant effect, in which the surface treatment of silicone and stearic acid could increase the combination's dispersion in the substrate, improve the compatibility with the substrate, reduce the amount of flame retardant, so as to improve the processing performance, reduce the flame retardant's influence to physical and mechanical properties, having excellent flame-retardant synergy. In the present application, the flame retardant may also be surface modified. Specifically, the mixture of the silane coupling agent, calcium stearate, and magnesium oleate is used to treat magnesium hydroxide (MH), which could improve the surface properties and could also form a good carbonized structure during combustion, further improving the flame retardant and mechanical property. Stearic acid could effectively improve the toughness of composite of MH/polypropylene, but may reduce the tension and bending property of the material at the same time. When there is a soft interface layer between the filler particles and the polymer matrix, the weak interfacial effect is sufficient to assure the material has sufficient toughness. For polymer composite with large amount of filler, the dispersion of the filler has an important influence to the mechanical property of the material. The dispersion depends on the interaction between the particles and between the particle and polymer, and the interaction between the particles is mainly determined by the size and distribution of the particle. Generally, larger particles may cause the polymer to fracture in dry condition, and smaller particles may form agglomeration, both of which have a decisive influence to the physical and mechanical property of the material.

A manufacture method for a spectacles rubber plate disclosed herein comprises the following steps:
Mixing the components of the raw material to obtain a mixture;
And, extruding and molding the mixture.

As described above, the extruding and molding is suitably performed at a temperature of 160°C to 220°C.

In order to fully dry each component of the raw material, the method further comprises step of preheating the components of the raw material before the step of mixing. The preheating is performed at a temperature of 80∼95°C, and the time of the preheating is 2-4 hours.

What is not mentioned above applies to the prior art.

### Embodiment 1

The first step: matching to obtain raw material. That is, based on 100 parts by mass of the total mass of raw material, 98.8 parts by mass of a raw rubber, 0.1 parts by mass of a colorant, 0.1 parts by mass of a laser marking agent (composed of 46wt% of mica powder and 54wt% of tin dioxide), and 0.08 parts by mass of a plasticizer and 0.1 to 1 part by mass of an anti-UV agent.

The second step: putting the raw material prepared in the first step into the mixer for fully mixing.

The third step: preheating the raw material mixed in the second step at 80°C for 4 hours.

The fourth step: extruding and molding the raw material at 160°C in the equipment for extruding and molding, to obtain a spectacles rubber plate which could be directly used for laser marking.

### Embodiment 2

The first step: matching to obtain raw material. That is, based on 100 parts by mass of the total mass of raw material, 99.5 parts by mass of a raw rubber, 0.3 parts by mass of a colorant, 0.1 parts by mass of a laser marking agent (composed of 62wt% of mica powder and 38wt% of tin dioxide), and 0.08 parts by mass of a plasticizer and 1 part by mass of an anti-UV agent.

The second step: putting the raw material prepared in the first step into the mixer for fully mixing.

The third step: preheating the raw material mixed in the second step at 95°C for 2 hours.

The fourth step: extruding and molding the raw material at 220°C in the equipment for extruding and molding, to obtain a spectacles rubber plate which could be directly used for laser marking.

### Embodiment 3

The first step: matching to obtain raw material. That is, based on 100 parts by mass of the total mass of the raw material, 99.5 parts by mass of a raw rubber, 0.3 parts by mass of a colorant, 1 part by mass of a laser marking agent (composed of 50wt% of mica powder and 50wt% of antimony dioxide), 0.12 parts by mass of a plasticizer and 0.1 parts by mass of an anti-UV agent.

The second step: putting the raw material prepared in the first step into the mixer for fully mixing.

The third step: preheating the raw material mixed in the second step at 90° C for 3 hours.

The fourth step: extruding and molding the raw material at 200°C in the equipment for extruding and molding, to obtain a spectacles rubber plate which could be directly used for laser marking.

### Embodiment 4

The first step: matching to obtain raw material. That is, based on 100 parts by mass of the total mass of the raw material, 99.1 parts by mass of a raw rubber, 0.2 parts by mass of a colorant, 0.55 parts by mass of a laser marking agent (composed of 54wt% of mica powder and 46wt% of antimony dioxide), 0.08 to 0.12 parts by mass of a plasticizer and 0.50 parts by mass of an anti-UV agent.

The second step: putting the raw material prepared in the first step into the mixer for fully mixing.

The third step: preheating the raw material mixed in the second step at 90° C for 3 hours.

The fourth step: extruding and molding the raw material at 200°C in the equipment for extruding and molding, to obtain a spectacles rubber plate which could be directly used for laser marking.

The key points of the spectacles rubber plate of the present application are as follows: 1) The laser marking additive is proportionately added in the pre-stage of the production of the rubber plate, and there is no need to change processing of other stage, and the produced rubber plate could be used for laser printing to form pattern, and the use thereof is simple and convenient, which could be realized by industrial laser marking system. Compared with the traditional products obtained by screen printing and transferring printing process, the product of the present application could obtain revolutionary improvement in the aspects of the weather resistance, the migration resistance of color and the exquisiteness of the texture pattern and so on. The product of the present application is a new functional material.

2) As a brand-new material, it provides a brand-new design concept for spectacles design, which coincides with the current trend of personalized customization. In the stage of spectacles production, it makes the processing simpler and more flexible, high efficiency, low cost and high yield. The method could realize continuous production operation, and is easier to interface with Industry 4.0 than process such as mosaic, screen printing and injection, transferring printing, splicing, laser and hot stamping process and so on.

The spectacles rubber plate of the present application has the following advantages:
(1)The production process of the rubber plate has slight influence to the color of the components and it is easy to implement color formulation in the production process;
(2)No solvent or ink is involved in the process of producing pattern; the production process is simple, clean and environmentally friendly;
(3)There is no impact on the mechanical property and physical property of the rubber plate, and there is no need to change the processing of the spectacles in the later stage.
(4)The spectacles rubber plate has outstanding resolution, contrast and gray-scale response, making the pattern more clear and exquisite;
(5)When printing pattern, without the pretreatment and subsequent processing of the rubber plate, the non-contact printing under the existence of the interlayer could be realized, which is non-destructive to the surface of the product.
(6)The operation is flexible operation, and the printing process could be added in any stage of the processing of the plate or spectacles, and there is no limit to the size of the pattern, and the process is short and easy to modify, and the extra cost of the sample production is negligible;
(7)It is easy to realize continuous production operation, so as to increase production efficiency.

Since the ranges of the process parameters involved in the present application could not be fully embodied in the above embodiments, it is perfectly conceivable for the person skilled in the art that any value falling within the above range could implement the present application. Of course, it also comprises any combination of specific values selected from several ranges. Herein, for the consideration of space, embodiments that reflect specific values within a certain range or several ranges are omitted, which should not be considered as an insufficient disclosure of the technical solution of the present application.

The applicant states that the above embodiments of the present application describes the detailed equipment and process of the present application, but the present application is not limited to the above detailed equipment and process, that is, it does not mean that the implementation of the present application must rely on the above detailed equipment and process. It should be apparent to the person skilled in the art that any improvement made to the present application, the equivalent replacement of each raw material of the product of the present application, the addition of auxiliary component, the selection of embodiment should be considered to fall into the protection scope of the present application.

## Claims

1. A spectacles rubber plate, extruded from a raw material comprising a raw rubber and a colorant; wherein the raw material comprises 98.8 to 99.5 parts by mass of the raw rubber and 0.1 to 0.3 parts by mass of the colorant.

2. The spectacles rubber plate according to claim 1, wherein the raw material further comprises a laser marking agent.

3. The spectacles rubber plate according to claim 2, wherein the laser marking agent is in an amount of 0.1 to 1 part by mass.

4. The spectacles rubber plate according to claim 1, wherein the raw material further comprises a plasticizer in range from 0.08 to 0.12 parts by mass.

5. The spectacles rubber plate according to claim 1, wherein the raw material further comprises an anti-UV agent in range from 0.1 to 1 part by mass.

6. The spectacles rubber plate according to claim 1, wherein the raw rubber is cellulose acetate.

7. The spectacles rubber plate according to claim 2, wherein the laser marking agent comprises mica powder in range from 46wt% to 62wt% and tin dioxide or antimony dioxide in range from 38wt% to 54wt%, based on that the total mass of the laser marking agent is 100wt%.

8. A manufacture method for a spectacles rubber plate according to any one of claims 1∼7, comprising the following steps:
mixing the components of the raw material to obtain a mixture;
and, extruding and molding the mixture.

9. The manufacture method according to claim 8, wherein the extruding and molding is performed at a temperature of 160 to 220°C.

10. The manufacture method according to claim 8, wherein after the step of mixing and before the step of the extruding and molding, preheating the components of the raw material, and the preheating is performed at a temperature of 80°C to 95°C, and the time of the preheating is in range from 2h to 4h.
